# EUROPEAN PATENT APPLICATION

(11) **EP 4 213 079 A1**
(43) Date of publication of application: **19.07.2023**
(21) Application number: 23152201.2
(22) Date of filing: 18.01.2023
(51) Int. Cl.: G06Q 10/02, G06Q 30/0251, G06Q 50/14

(54) **TRANSPORTATION DECISION INTERFACE ENGINE**

(30) Priority: 18.01.2022 US 202263300523 P
(71) Applicant: OneSky Flight LLC, Richmond Heights, OH 44143 (US)
(72) Inventor: COLLINS, Andrew, Richmond Heights 44143 (US); HOHULIN, Adam, Richmond Heights 44143 (US); CAMPOBASSO, Michael, Richmond Heights 44143 (US); NAGALLA, Durga, Richmond Heights 44143 (US); LANPHEAR, William, Richmond Heights 44143 (US); SYPHERS, David, Richmond Heights 44143 (US); HENDRIK, Oleksandr, Richmond Heights 44143 (US)
(74) Representative: Murgitroyd & Company

(57) **Abstract**

Embodiments described herein are related to systems and methods for offering an upgrade for a transportation service. In one aspect, a computer can receive a reservation request for a transportation service including an itinerary indicating a first location, a second location, and a first service category of the transportation service. The computer can determine a plurality of reposition estimates for a plurality of service categories including the first service category and one or more potential service categories, each reposition estimate being determined based upon the first location, the second location, and a particular service category. The computer can identify, as a second service category, the potential service category having the reposition estimate lower than the reposition estimate of the first service category in the reservation request. The computer can transmit to the client device an upgrade notification indicating an eligibility to update the itinerary to include the second service category.

## Description

### CROSS-REFERENCE TO RELATED APPLICATION

This application claims priority to US Provisional Application No. 63/300,523, filed January 18, 2022, which is incorporated by reference in its entirety.

### TECHNICAL FIELD

This application relates generally to offering upgrades for transportation services to conserve transportation resources.

### BACKGROUND

Developments in electronic devices and communication have allowed ease of reserving transportation services (e.g., aircraft charters, airline carriers, rental cars, for-hire drivers, mass transit). For example, a user can search for a flight leaving on a selected departure date through a client device. The client device may query a booking system of the travel provide, or issue a query to a search engine operated by a travel service provider or a travel agency for available flights on the selected departure date and receive a list of available flights or carriers for the selected departure date in return. The client device may present the list of available flights or carriers to the user and allow the user to select and reserve a flight. Other transportation service industries and third-party agencies and aggregation services (e.g., Expedia^{®}, Kayak^{®}) implement similar travel-related systems and software applications.

Often, a travel service provider may provide an upgrade offer to upgrade a category of transportation service to travel with a larger vehicle (e.g., larger plane), a larger seat, and/or added amenities. Upgrade offers can be made depending on the travel demands on the day of departure. For example, if a larger seat is available in the same vehicle (or same plane), the travel service provider can present an offer to upgrade to travel with the larger seat. Although some clients may benefit from last minute upgrade offers, such last minute upgrade offers may not be sufficient to fill empty seats and lead to inefficient usage of transportation resources.

### SUMMARY

Existing travel industry system may identify opportunities for ticketed travelers to upgrade service and present an upgrade offer, depending on the travel demands for a particular vehicle (or plane) on the date of the departure. These prior approaches, however, are based on travel demands or a number of empty seats for a particular vehicle (or plane) on the departure date, and such approaches do not allow upgrader offers to be made on days in advance of the departure date. These prior approaches for identifying upgrades, however, are often employed by entities with access to a relatively large selection of vehicles, and typically presume access to the particular vehicle on the original travel itinerary or a similar vehicle that offers similar services and experience. Moreover, the prior approaches are typically tightly linked to a rewards program to identify a queue for preferred travelers. A problem with the prior systems arises in circumstances where the travel service provide has limited access to vehicles (e.g., cars, buses, aircraft); particularly where vehicles have limited seating available. In these circumstances, vehicles often need to be repositioned or travel some distance between servicing travelers. Prior systems lack the sophistication for handling these additional dynamics. Moreover, prior systems are often programmed with a presumption that the nature of the transportation service is relatively standardized, from one vehicle to another. For example, offering an upgrade on a plane from coach to business class, or business class to first class, generally maintains a relatively similar service. But in chartered private jets, the differences in service (e.g., legroom, flight time) between planes could vary greatly. Similar disparities arise when comparing large-scale travel services (e.g., rental cars, hotels) against boutique or specialized counterparts. What is needed, therefore, is an improvement over prior travel systems for identifying and offering upgrades that account for limited inventory, repositioning requirements, and/or wider variance in the service or experience.

Embodiments disclosed herein may address shortcomings in the art and may provide additional or alternative improvements or benefits. The embodiments include systems and methods of selectively determining whether to provide an upgrade offer for a category of travel service. The systems and methods may perform a set of checks to determine whether to present an upgrader offer to a user of a client device, and electronically present the upgrade offer to the user through the client device, based on the set of checks. An example of the set of check include determining a client profile, determining reposition estimates, and determining the profitability of the travel service provider. By performing a set of checks based on the client profile, an upgrade message can be selectively presented to the user in a manner that user will genuinely consider the upgrade offer to avoid congesting a communication network or to avoid dissipating computational and communication resources of the client device. In addition, by performing the set of checks based on the reposition estimates, an upgrade offer allowing reduction in repositioning costs can be presented to the user. Moreover, by performing the set of checks based on the profitability to the travel service provider, an upgrade offer that may be burdensome to the travel service provider may not be presented.

Advantageously, offering an upgrade for a transportation service as disclosed herein can improve a balance of travel demands in different locations (e.g., regions, airports, cities). In one aspect, pending travel demands or prior travel records can be analyzed to determine or predict travel demands at different airports for the upgraded transportation service. According to the predicted travel demands, an upgrade offer can be provided to travel from or travel to places, regions, or airports with less travel demands, such that a travel through crowded regions or airports can be obviated. By avoiding travel through the crowded regions or airports, wait time can be reduced and costs for travel can be lowered.

In some embodiments, computer-implemented method comprises receiving, by a computer from a client device associated with a user, a reservation request for a transportation service including an itinerary indicating a first location, a second location, and a first service category of the transportation service; determining, by the computer, a plurality of reposition estimates for a plurality of service categories including the first service category and one or more potential service categories, each reposition estimate being determined based upon the first location, the second location, and a particular service category of the plurality of service categories; identifying as a second service category, by the computer, the potential service category having the reposition estimate comparatively lower than the reposition estimate of the first service category in the reservation request; and predicting, by the computer, an acceptance likelihood score that the user accepts the second service category by applying a machine-learning architecture on upgrade history data for the user stored in a database; and responsive to determining that the acceptance likelihood score satisfies a corresponding acceptance likelihood threshold, transmitting, by the computer, to the client device an upgrade notification indicating an eligibility to update the itinerary to include the second service category.

In some embodiments, a system for selectively providing an upgrade offer includes a computer. The computer comprises one or more processors and is configured to receive, from a client device associated with a user, a reservation request for a transportation service including an itinerary indicating a first location, a second location, and a first service category of the transportation service; determine a plurality of reposition estimates for a plurality of service categories including the first service category and one or more potential service categories, each reposition estimate being determined based upon the first location, the second location, and a particular service category of the plurality of service categories; identify as a second service category the potential service category having the reposition estimate comparatively lower than the reposition estimate of the first service category in the reservation request; predict an acceptance likelihood score that the user accepts the second service category by applying a machine-learning architecture on upgrade history data for the user stored in a database; and responsive to determining that the acceptance likelihood score satisfies a corresponding acceptance likelihood threshold, transmit to the client device an upgrade notification indicating an eligibility to update the itinerary to include the second service category.

The system may further comprise one or more of the following features:

The computer may be further configured to determine an upgrade eligibility score for a user of the client device based upon the itinerary and one or more historic itineraries associated with the user stored in a database; and determine that the upgrade eligibility score for the user satisfies a user eligibility threshold, wherein the computer is configured to transmit the upgrade notification based in part upon determining that the upgrade eligibility score for the user satisfies the user eligibility threshold.

When determining the reposition estimate for the first service category the computer may be configured to: apply a demand reposition machine-learning architecture on the itinerary using the first location, the second location, and the first service category; and for each potential service category, apply the demand reposition machine-learning architecture on the itinerary using the first location, the second location, and the particular service category.

When determining the plurality of reposition estimates for the plurality of service categories the computer may be configured to: determine the reposition estimate of the first service category, based on first regional demands associated with the first service category; determine the reposition estimate of one of the one or more potential service categories, based on second regional demands associated with the one of the one or more potential service categories; and compare the reposition estimate of the first service category and the reposition estimate of the one of the one or more potential service categories.

When determining the plurality of reposition estimates for the plurality of service categories the computer may be configured to: determine whether the transportation service is scheduled within a predetermined number of dates.

In response to determining that the transportation service is scheduled after the predetermined number of dates, the computer may be configured to: predict the second regional demands for one or more flights in regions associated with the one of the one or more potential service categories based on prior flight records of the regions; and determine the reposition estimate of the reposition estimate of the one of the one or more potential service categories based on the predicted second regional demands.

In response to determining that the transportation service is scheduled within the predetermined number of dates, the computer may be configured to: determine one or more pending regional demands for one or more flights in regions associated with the one of the one or more potential service categories as the second regional demands; determine a balance of the second regional demands; and determine the reposition estimate of the one of the one or more potential service categories, based on the second regional demands.

The computer may be configured to: determine whether the user has rejected upgrade offers more than a threshold number of times within a time period; and generate the upgrade notification, based at least on determining that the user has not rejected the upgrade offers more than the threshold number of times within the time period.

The the computer may be configured to: determine whether an upgrade to the transportation service is beneficial to the user, based on a travel history of the user; and generate the upgrade notification, based at least on determining that the upgrade is beneficial to the user.

It is to be understood that both the foregoing general description and the following detailed description are exemplary and explanatory and are intended to provide further explanation of the invention as claimed.

### BRIEF DESCRIPTION OF THE DRAWINGS

The accompanying drawings constitute a part of this specification, illustrate an embodiment of the invention, and, together with the specification, explain the invention.
**FIG. 1** illustrates a computer system for reserving transportation service, in accordance with an embodiment.
**FIG. 2** illustrates an interaction diagram of reserving a transportation service and offering an upgrade to the requested transportation service, in accordance with an embodiment.
**FIG. 3** illustrates a method of determining whether to provide an upgrade offer, in accordance with an embodiment.
**FIG. 4** illustrates a method of performing reposition estimate check, in accordance with an embodiment.
**FIG. 5** illustrates a method of determining a reposition estimate, in accordance with an embodiment.
**FIG. 6** illustrates an example user interface to search for available transportation services, in accordance with an embodiment.
**FIG. 7** illustrates an example user interface to select a category of a transportation service, in accordance with an embodiment.
**FIG. 8** illustrates an example user interface to confirm the user's selection of the transportation service, in accordance with an embodiment.
**FIG. 9** illustrates an example user interface to present an upgrade offer, in accordance with an embodiment.
**FIG. 10** illustrates an example user interface to confirm the upgrade request, in accordance with an embodiment.

### DETAILED DESCRIPTION

Reference will now be made to the exemplary embodiments illustrated in the drawings, and specific language will be used here to describe the same. It will nevertheless be understood that no limitation of the scope of the invention is thereby intended. Alterations and further modifications of the inventive features illustrated here, and additional applications of the principles of the inventions as illustrated here, which would occur to a person skilled in the relevant art and having possession of this disclosure, are to be considered within the scope of the invention.

Various embodiments disclosed herein are related to systems and methods for offering an upgrade for a transportation service. Examples of a transportation service include a travel service provided through one or more vehicles (e.g., airplanes, helicopters, trains, buses, automobiles, boats, ships). In one aspect, a transportation reservation system can receive a request to reserve a category of a transportation service for a user. An upgrade for the transportation service may be a transportation service with a higher value category (e.g., larger or more luxurious vehicle, faster vehicle, larger construction/utility vehicle, larger seat, added amenities). The transportation reservation system can determine whether to provide an upgrade offer to upgrade the transportation service, based on one or more evaluation checks. A traveler-user operates a client device or app that accesses the transportation system to manage reservations and receive notifications through a user interface of the app. The transportation reservation system can generate a notice indicating the user's eligibility of the upgrade to the transportation service, based on the one or more checks. The transportation reservation system transmits the notice to the client device operated by the user.

The transportation reservation system can determine whether to provide the upgrade offer based on reposition estimates. A reposition estimate may be a cost of repositioning one or more vehicles among the transportation system's ecosystem of available vehicles. Often, airplanes (or other vehicles) are repositioned, after or while providing a transportation service. For example, an airplane may fly from a first airport to a second airport with passengers. After offloading the passengers, instead of returning to the first airport, the airplane may be repositioned to a nearby airport to refuel or provide another transportation service to other passengers. Repositioning with no or with a few users may be referred to as a dead leg service. In some circumstances, the travel service may identify an upgrade offer for a user as a means for reducing dead legs and improve utilization of vehicles. The transportation system executes software, which may include a machine-learning architecture, to predict reposition estimates for the vehicles that would potentially provide one or more corresponding transportation services, and provide an upgrade offer where the repositioning estimate indicates the upgraded service would be more efficient and profitable compared to a dead leg. The upgrade offer may be provided in a manner that the user can enjoy the upgraded transportation service at a reduced cost, while the service provider of the transportation service can benefit from avoiding dead leg services or reduced reposition costs.

Advantageously, offering an upgrade for a transportation service as disclosed herein can improve a balance of travel demands in different regions (or airports). For example, certain airports may have higher travel demands than other airports. In one aspect, a large amount of data for pending travel demands or prior travel records can be analyzed to determine or predict travel demands at different airports for the upgraded transportation service. According to the predicted travel demands, an upgrade offer can be provided to travel from or travel to places, regions, or airports with less travel demands, such that a travel through crowded regions or airports can be obviated. By avoiding travel through the crowded regions or airports, wait time can be reduced and costs for travel can be lowered.

Although some examples herein are provided with respect to a flight service, general principles disclosed herein can be applied to other transportation services. Non-limiting examples may include rental cars, rental construction/utility vehicles (e.g., cranes), and hotels, among others.

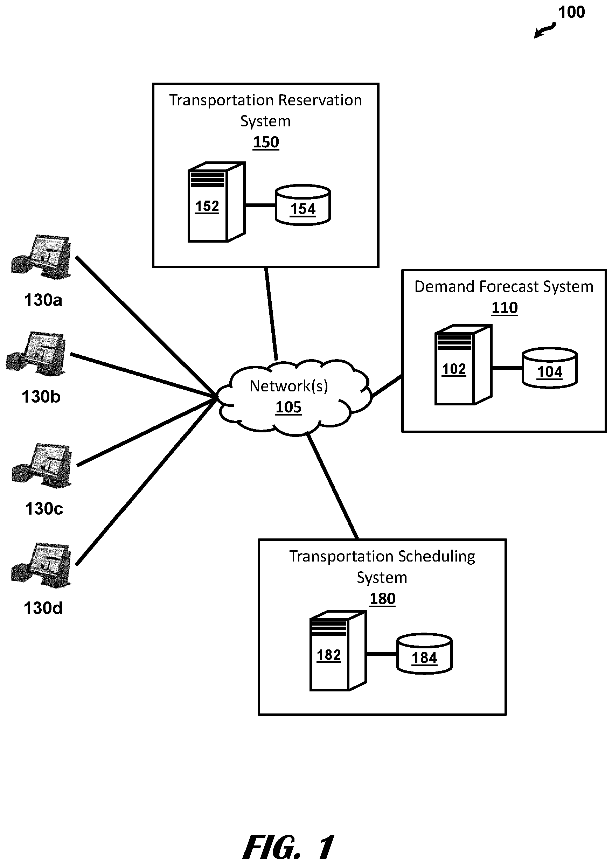

**FIG. 1** illustrates a computer system **100** for reserving transportation service, in accordance with an embodiment. In some embodiments, the system **100** includes a transportation reservation system **150,** any number of client computing devices **130** (e.g., client devices **130a-130d**), one or more downstream transportation scheduling systems **180,** and a demand forecast system **110,** which communicate via one or more communication network **105.** The transportation reservation system **150** includes one or more servers **152,** and one or more databases **154.** The demand forecast system **110** includes one or more servers **102,** and one or more databases **104.** The transportation scheduling systems **180** includes one or more servers **182,** and one or more databases **184.** Embodiments may comprise additional or alternative components or omit certain components from those of **FIG. 1****,** and still fall within the scope of this disclosure. For example, the system **100** may include a third-party system that communicates with the client devices **130,** the transportation reservation system **150,** the demand forecast system **110,** or any combination thereof, through the network **105.** Embodiments may include or otherwise implement any number of devices capable of performing the various features and tasks described herein. For example, **FIG. 1** shows the transportation reservation system **150** and the demand forecast system **110** as distinct computing systems, though the transportation reservation system **150** and the demand forecast system **110** may be implemented as a single system or operated by a single entity.

The various components of the system **100,** the transportation reservation system **150** (including the server **152,** and database **154**), the demand forecast system **110** (including the server **102,** and database **104**), the transportation scheduling system **180** (including the server **182** and database **184**) and the client devices **130** may be connected with each other via hardware and software components of one or more system networks **105** or internal networks. Examples of such networks **105** include, but are not limited to, Local Area Network (LAN), Wireless Local Area Network (WLAN), Metropolitan Area Network (MAN), Wide Area Network (WAN), and the Internet. The communication over any particular network **105** may be performed in accordance with various communication protocols, such as Transmission Control Protocol and Internet Protocol (TCP/IP), User Datagram Protocol (UDP), and IEEE communication protocols, among others.

The client device **130** is a computing device operated by a user of the client device **130.** The client device **130** includes any computing device having computing hardware (e.g., processors, non-transitory memory) and software for performing the various processes and tasks described herein. Non-limiting examples of the client device **130** include smart phones, servers, desktops, laptops, tablets, and the like. The client device **130** executes software accessing the transportation reservation system **150** or demand forecast system **110** and allows the user to reserve a travel service. For example, the client device **130** presents a user interface allowing the user to search for a transportation service (e.g., flights). The client device **130** may receive a user selection of a destination and/or a departure date, and query the transportation reservation system **150** for available transportation services meeting the user selection. From the transportation reservation system **150,** the client device **130** may receive a list of available transportation services with associated fare amounts or fees, and present the list of available transportation services with the associated fare amounts or fees to the user through a user interface. Through the user interface, the client device **130** may receive a user selection of a desired transportation service, and notify the user selection to the transportation reservation system **150** to execute or complete the reservation of the transportation service.

The server **102** of the demand forecast system **110** is a computing device that predicts demands for transportation services. In some cases, the demand forecast system **110** may be operated by the same entity that operates the transportation reservation system **150.** Alternatively, the demand forecast system **110** may be operated by a different entity that operates the transportation reservation system **150.** The server **102** obtains prior records of bookings or reservations of transportation services from the client devices **130,** the database **104** of the demand forecast system **110,** and/or external database of the transportation reservation system **150.** In some embodiments, the server **102** implements various machine-learning architectures according to the prior records to, for example, predict future vehicle demands or booking statuses of transportation services. By implementing the machine-learning architecture that evaluate prior itineraries (e.g., arrival location, departure location, category of service, vehicle used), the server **102** may better determine predicted demands, available inventory, and positioning or repositioning needs before or on the departure date.

The database **104** of the demand forecast system **110** may be hosted on any computing device of the demand forecast system **110** comprising non-transitory machine-readable storage media, which may include the server **102** or other computer device. The database **104** may store various types of data records referenced by the server **102** when performing certain operations or tasks described herein. The types of data records may include, for example, user data associated with users of the app and registered with the demand forecast system **110** or the transportation reservation system **150;** historic travel itineraries for users, airports, service providers, or other entities associated with travel planning; and historic departure-arrival location pairings associated with the vehicle inventory; among various other types of data. The various types of data may be additionally or alternatively stored in a database **154** of the reservation system **150.** The database **104** may store various configurations and parameters of the layers and functions of the machine-learning architecture, such as the number and types of functions performed by the neural network models or the set of parameters (e.g., trained hyper-parameters or weights) of the neural network models. The database **104** may further store historic, simulated, or live travel data records of various types, which in some cases the database **104** stores with training labels for training the machine-learning architecture. The server **102** may query database **104** and apply the machine-learning architecture against the relevant sets of travel data records during training or simulation operations. The server **102** may then tune the set of parameters (e.g., hyper-parameters or weights) of the neural network models to improve the accuracy of the neural network models using the training labels. For instance, the server **102** may tune or adjust one or more parameters of a neural network model when a predicted demand output generated by the neural network model does is inaccurate or fails an accuracy threshold with respect to an expected output indicated by the training labels, where the server **102** references attributes of the training labels to determine the expected output and the accuracy.

The server **152** of the transportation reservation system **150** is a computing device that executes software to assist users with reserving a transportation service. The server **152** may be operated by a transportation service provider, a travel agency, or a third-party agency. The server **152** may receive, from the client device **130** a request for a list of available transportation services for a particular destination and/or the departure date. In response to the request, the server **152** may identify available transportation services for the particular destination and/or the departure date and associated fare amounts or fees for each transportation service. The server **152** may generate a list indicating the available transportation services with associated fare amounts or fees, and provide the list to the client device **130.** The server **152** may receive a user selection of the desired transportation service and process the reservation of the transportation service by booking the transportation service for the client device **130** and/or by notifying the transportation scheduling system **180.**

In one aspect, the server **152** of the transportation reservation system **150** may executes software to provide an upgrade offer for a transportation service. The server **152** may generate an upgrade offer message to offer an upgrade to a transportation service. The upgrade offer message may indicate a category of upgraded vehicle offered, an amount of additional fees, and/or change in time of arrival or departure. For example, in response to the reservation request message, the server **152** may determine whether to provide an upgrade offer or not. The server **152** may determine whether to provide the upgrade offer, based on one or more of a user profile, regional demand repositions, a value of upgrade to the user, a profitability of a travel service provider, and an amount of discount of the upgrade. By performing the set of checks, the server **152** can selectively generate an upgrade offer message to ensure that the user will genuinely consider the upgrade offer to avoid congesting the network **105** or to avoid dissipating computational and communication resources of the client device **130.** In addition, the server **152** can selectively generate an upgrade offer message to ensure that transportation resources utilized in an efficient manner by reducing dead leg services. In response to all of the checks are satisfied or a threshold number of checks are satisfied, the server **152** may generate an upgrade offer message to offer an upgrade to the transportation service, and transmit the upgrade offer message to the client device **130.** In response to the upgrade offer message, the server **152** may receive the upgrade selection message from the client device **130.** According to the upgrade selection message, the server **152** may execute and complete the reservation of the requested transportation service, or an upgrade to the transportation service.

The database **154** of the transportation reservation system **150** may be hosted on any computing device of the transportation reservation system **150** comprising non-transitory machine-readable storage media, which may include the server **152** or other computer device. The database **154** may store, for each user, a corresponding user profile. The user profile may include or indicate a name, age group, a travel history (e.g., departure airports, arrival airports, departure dates and times, arrival dates and times, etc.) of the user, upgrade history data indicating a history of when upgrade offers were made and whether the upgrade offers were accepted or rejected, an upgrade eligibility score, etc. The server **152** may retrieve a user profile for a user, and the server **152** can selectively transmit, to a client device **130** of the user indicated by the user profile or in an active web-session, an upgrade offer that the user will genuinely consider the upgrade offer to avoid congesting the network **105** or to avoid dissipating computational and communication resources of the client device **130.**

In some implementations, prior to generating a notification for the upgrade offer for a proposed upgraded itinerary, the server **152** may determine or predict an upgrade acceptance likelihood score indicating the likelihood that the user would accept or reject the upgraded itinerary. In such implementations, the server **152** generates and transmits upgrade offer notification to the client device **130** in response to determining that the upgrade acceptance likelihood score satisfies a corresponding threshold value. Likewise, the server **152** would not transmit the upgrade offer notification to the client device **130** in response to determining that the upgrade acceptance likelihood score does not satisfy the corresponding threshold value. As an example, the server **152** compares one or more types of data in the user's upgrade history data records against corresponding types of data in the upgraded itinerary to identify one or more matches. The server **152** may generate the acceptance likelihood score for the user based upon the number of matches in the comparison. In another example, the server **152** generates the acceptance likelihood score by applying layers or functions of the machine-learning architecture on the user's upgrade history data. The machine-learning architecture extracts various types of data from upgrade history data records as features and applies operational layers of the machine-learning architecture trained to perform one or more machine-learning operations and techniques (e.g., neural network models, Gaussian Mixture Models, A-nearest neighbor, clustering) using the particular types of data of the upgrade history data. The operational layers machine-learning architecture generate the acceptance likelihood score and determine whether the acceptance likelihood score satisfies the corresponding threshold value according to the particular machine-learning operations and techniques applied. For instance, the machine-learning architecture may determine whether the acceptance likelihood score satisfies the corresponding threshold value based upon a geometric or relative distance between the acceptance likelihood score and an expected likelihood score, or based upon a geometric or relative distance from the acceptance likelihood score to one or more centroids of one or more clusters generated using upgrade history data of the current user and/or any number of other users. These are merely illustrative examples and not intended to be limiting on potential embodiments.

The database **154** may also store various configurations and parameters of the layers and functions of a demand reposition machine-learning architecture, such as the number and types of functions performed by the layers of the machine-learning architecture or the set of parameters (e.g., trained hyper-parameters or weights) of the machine-learning architecture. The server **152** may query the database **154** and apply the machine-learning architecture against the relevant sets of travel data records during training or simulation operations. The server **152** may then tune the set of parameters (e.g., hyper-parameters or weights) of the neural network model to improve the accuracy of the neural network model. Parameters of a neural network model of the machine-learning architecture can be trained or set, such that the neural network model can determine or predict a reposition estimate for an itinerary indicating, for example, a departure airport, an arrival airport, a departure date, an arrival date, and a category of transportation service. In one aspect, determining the reposition estimate involves querying remote devices (e.g., demand forecast system **110** and/or the transportation scheduling system **180**) and processing a large amount of data for regional demands or pending regional demands of different regions. By implementing the demand reposition machine-learning architecture, the transportation reservation system **150** can obtain reposition estimates in a prompt manner while reducing communication with remote devices (e.g., demand forecast system **110** and/or the transportation scheduling system **180**).

The downstream transportation scheduling systems **180** include any number of computing systems that receive itinerary records when booked or updates to the itinerary records from the servers **102, 152.** For example, a downstream transportation scheduling system **180** may include any number of computing systems operated by the Federal Aviation Administration (FAA), airports, and aircraft owners. A server **182** of a transportation scheduling system **180** may be a computing device that assists in scheduling flights and requires itinerary records. The server **182** may receive a flight notification message or update messages from the server **152** of the transportation reservation system **150** to schedule a flight or update a user's itinerary. The flight notification message may indicate an original itinerary or upgraded itinerary, such as a departure airport, an arrival airport, a departure date and time, and an arrival date and time. The itinerary may also include a course of flight.

The database **184** of the transportation scheduling system **180** may be hosted on any computing device of the transportation scheduling system **180** comprising non-transitory machine-readable storage media, which may include the server **182** or other computer device. The database **184** can store travel records for different airports. A travel record of an airport may indicate a number of arrivals and a number of departures for a particular day or a particular time period. The server **182** may receive a request for travel records, and retrieve the requested travel records from the database **184.** The server **182** may provide the requested travel records. For example, the server **182** may receive, from the server **152** of the transportation reservation system **150,** a request for travel records for a particular geographical region for a certain time period, and provide the requested flight records. In response to the request, the server **182** can query the database **184** to obtain records of a number of arrivals and a number of departures for the time period for each airport in the requested geographical region, and provide the requested travel records to the server **152.**

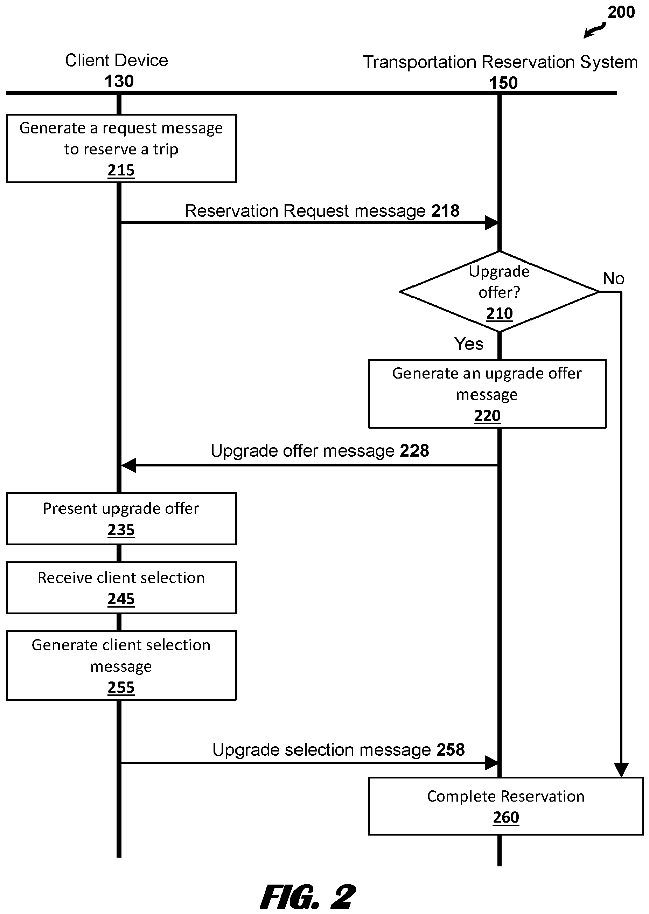

**FIG. 2** illustrates an interaction diagram **200** of reserving a transportation service and offering an upgrade to the requested transportation service, in accordance with an embodiment. The process of upgrading a transportation service is performed by a client device (e.g., client device **130**) and a transportation reservation system (e.g., transportation reservation system **150**). In some embodiments, the process of upgrading a transportation service can be performed by other entities. In some embodiments, the process of upgrading a transportation service in the interaction diagram **200** includes more, fewer, or different steps than shown in **FIG. 2****.**

At step **215,** the client device generates a reservation request message **218** to reserve a trip or a travel service. The client device transmits the reservation request message **218** to the transportation reservation system. The reservation request message **218** may be a message or signal indicating a selected transportation service. For example, the client device may receive, through a user interface, a user selection of a destination, a departure date, and a category of transportation service. Examples of a category of transportation service include a preferred plane, a select plane, a premium plane, etc. The client device may transmit the reservation request message **218** to the transportation reservation system.

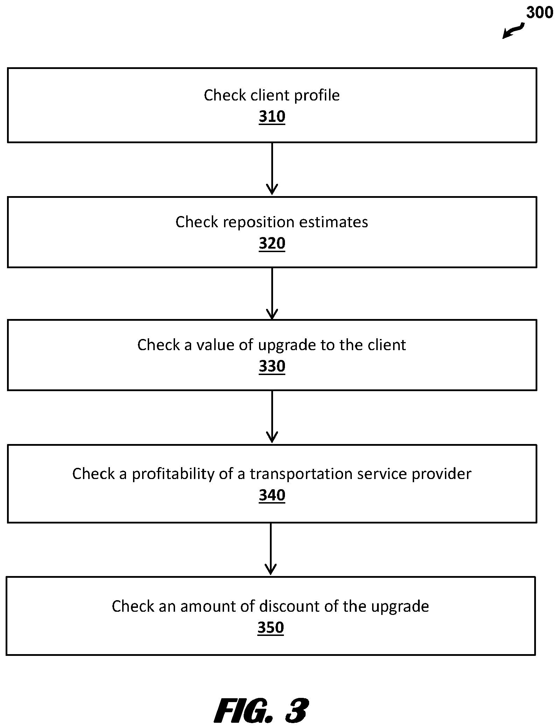

At step **210,** the transportation reservation system receives the reservation request message **218** from the client device, and determines whether to make an upgrade offer for the travel service. In one approach, in response to the reservation request message **218,** the transportation reservation system may perform a set of checks to determine whether to make an upgrade offer. The set of checks may be based on a user profile, regional demand repositions, a value of upgrade to the user, a profitability of a travel service provider, and an amount of discount of the upgrade. An example of performing the set of checks is provided below with respect to **FIGS. 3-5****.** In response to all of the checks are satisfied or a threshold number of checks are satisfied, the transportation reservation system may determine to provide an upgrade offer. In response to failing one or more checks, or less than a threshold number of checks being satisfied, the transportation reservation system may determine not to provide an upgrade offer. By performing the set of checks, the transportation reservation system may avoid congesting the client device with messages for upgrade offers that the user is likely reject anyway and induce more efficient or balanced utilization of transportation resources.

At step **260,** in response to determining not to provide the upgrade offer, the transportation reservation system may execute and complete reservation of the requested transportation service as indicated by the reservation request message **218.** In one approach, the transportation reservation system may provide or forward the reservation request message **218** to the transportation scheduling system to reserve the travel service as requested in the reservation request message **218.**

At step **220,** in response to determining to provide the upgrade offer, the transportation reservation system may generate an upgrade offer message **228.** The upgrade offer message **228** may be a message or signal indicating an offer to upgrade the travel service. The upgrade offer message **228** may indicate a category of upgraded vehicle offered, an amount of additional fees, and/or change in time of arrival or departure. The transportation reservation system may transmit the upgrade offer message **228** to the client device.

At step **235,** the client device receives the upgrade offer message **238,** and presents the upgrade offer in the upgrade offer message **238** through a user interface. For example, the client device may notify through the user interface that an upgrade to travel with a larger vehicle (e.g., larger plane) or a larger seat may be possible, and prompt the user to accept or decline the upgrade offer. The client device may present a user interface allowing the user to learn more details or other available upgrade options.

At step **245,** the client device receives through a user interface a user selection regarding the upgrade offer. In one example, the client device presents through a user interface an available upgrade option (or an available category of transportation service), and receives, through the user interface, a user selection of either accepting or rejecting the upgrade option. In one example, the client device presents through a user interface a list of available upgrade options (or available categories of transportation services), and receives, through the user interface, a user selection of an upgrade option.

At step **255,** the client device generates an upgrade selection message **258** indicating the user selection, and transmits the upgrade selection message **258** to the transportation reservation system. The upgrade selection message **258** may be a message or signal indicating whether the user accepts or rejects the upgrade offer, or a selected upgraded option (or a selected category of transportation service).

At step **260,** the transportation reservation system receives the upgrade selection message **258,** and executes reservation according to the upgrade selection message **258.** For example, if the upgrade selection message **258** indicates that the user rejected the upgrade offer, the transportation reservation system may execute and complete reservation of the requested transportation service with a category of vehicle or a type of seat as indicated by the reservation request message **218.** For example, if the upgrade selection message **258** indicates that the user accepted the upgrade offer, the transportation reservation system **150** may execute and complete reservation of the transportation service with an upgraded category of vehicle or an upgraded type of seat as indicated by the upgrade offer message **228** or the upgrade selection message **258.** The transportation reservation system may provide a request message to the transportation scheduling system to reserve the travel service, according to the user selection.

**FIG. 3** illustrates a method **300** of determining whether to make an upgrade offer based on a set of checks, in accordance with an embodiment. The method **300** may be performed by one or more computers of a system (e.g., server **152** of transportation reservation system **150,** server 102 of demand forecast system **110**). In some embodiments, the method **300** includes more, fewer, or different steps than shown in **FIG. 3****.** In some embodiments, some steps of the method 300 are performed in a difference sequence than shown in **FIG. 3****.**

In one aspect, based on the checks performed by the computer in the steps **310-350,** the computer may determine whether to make an upgrade offer or not. For example, if any of the checks performed in the steps **310-350** are not satisfied or less than a threshold number of checks performed in the steps **310-350** are satisfied, the computer may determine not to make an upgrade offer. As another example, if all of the checks performed in the steps **310-350** are satisfied or at least a threshold number of checks performed in the steps **310-350** are satisfied, the computer may determine to make an upgrade offer.

At step **310,** the computer checks a user profile by querying a database containing user data. In one approach, the computer checks two parts: user's past response to upgrade offers and an upgrade eligibility score. If the two parts are satisfied, then the computer may determine that check in the step **310** is satisfied. If any of the two parts are not satisfied, then the computer may determine that check in the step **310** is not satisfied.

For the first part of the check in the step **310,** the computer may check whether the user has rejected upgrade offers more than a threshold number of times within a time period. For example, the computer may determine whether the user has rejected more than 3 upgrade offers within 12 months. If the user has not rejected upgrade offers more than the threshold number of times within the time period, then the computer may determine that the first part of the check in the step **310** is satisfied. If the user has rejected upgrade offers more than the threshold number of times within the time period, then the computer may determine that the first part of the check in the step **310** is not satisfied. By performing the first check in the step **310,** the computer may avoid congesting a client device (e.g., client device **130**) with messages for upgrade offers that the user is likely reject anyway.

For the second part of the check in the step **310,** the computer may check whether the user has a sufficient upgrade eligibility score to qualify for the upgrade. The upgrade eligibility score may correspond to a number of flights flown through a travel service provider, or a total hours flown through the travel service provider. For a flight, a number of hours can be multiplied by a coefficient corresponding to a category of vehicle or plane of the flight. For example, a higher coefficient can be applied to a larger plane or a larger seat to reward the user utilizing luxurious services. The scores or flights corresponding to different flights can be added to determine the upgrade eligibility score. The computer may determine if the user has at least a threshold number of upgrade eligibility score. If the upgrade eligibility score exceeds the threshold number, then the computer may determine that the second part of the check in the step **310** is satisfied. If the upgrade eligibility score does not exceed the threshold number, the computer may determine that the second part of the check in the step **310** is not satisfied. By performing the second part of the check in the step **310,** the upgrade offers can be selectively presented to loyal or profitable users.

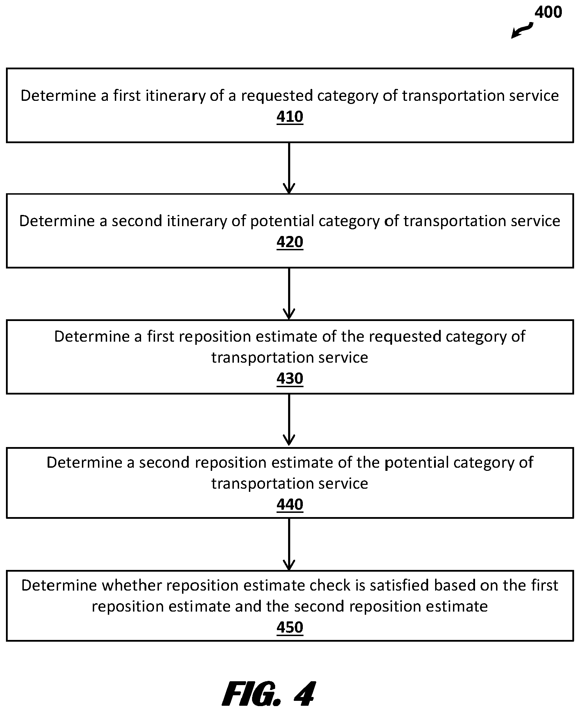

At step **320,** the computer checks reposition estimates. A reposition estimate representing a projected or predicted cost of repositioning. Often, airplanes (or other vehicles) are repositioned, after or while providing a transportation service. For example, an airplane may fly from a first airport to a second airport with passengers. After offloading the passengers, instead of returning to the first airport, the airplane may be repositioned to a nearby airport to refuel or provide another transportation service to other passengers. In one aspect, the computer may determine or predict reposition estimates, and determine whether the check in the step **320** is satisfied or not according to the reposition estimates. By comparing reposition estimates, a potential category of travel service allowing efficient transportation resources can be determined and presented to the user by the computer, but the computer would also preclude and avoid presenting to the user a potential category of travel service that would result in inefficient deployment of transportation resources. An example of check performed in the step **320** is provided below with respect to **FIGS. 4-5****.**

At step **330,** the computer checks a value of upgrade to the user. The computer may determine the value of upgrade to the user based on an offer amount of the upgraded transportation service and a user's initial fare amount of the initial or proposed upgraded transportation service. The offer amount may be a market value of a category of transportation service or a value of the category of transportation service that the transportation service provider is willing to offer. The user fare amount may be a value that the user is likely willing to pay for a category of transportation service.

In one aspect, the computer determines an offer amount of the upgraded transportation service. The sys computer tern may determine the offer amount of the upgraded transportation service, based on predicted demands during the scheduled travel time. In some embodiments, the computer may query another computer of another system (e.g., demand forecast system **110**) to obtain the predicted demands during the scheduled travel time. The computer may determine a discount amount to apply, for example, based on the user's travel history or points and/or savings from avoiding dead leg repositions, and apply applicable discounts to the offer amount.

The computer may also determine a user fare amount. The computer may determine or predict the user fare amount that the user is likely willing to pay, based on prior travel history. For example, the computer may obtain an average amount spent by the user for previous travels through similar category of transportation services (or similar category of airplanes) and/or based on an average amount spent by similar users (e.g., other users having similar travel histories or similar age group, demographic, etc.) for previous travels through the same or similar category of transportation services.

The computer may compare the offer amount with the user fare amount, and determine whether the check in the step **330** is satisfied or not based on the comparison. For example, in response to the offer amount being larger than the user fare amount, then the computer may determine that check in the step **330** is not satisfied. For example, in response to the offer amount being less than the user fare amount, then the computer may determine that check in the step **330** is satisfied. By performing the check in the step **330,** the computer may avoid congesting the client device with messages for upgrade offers that the user is likely reject anyway.

At step **340,** the computer checks a profitability of a transportation service provider. In one aspect, the computer determines a profit margin of the upgrade to transportation service. If the profit margin is less than a threshold amount, then the computer may determine that the check in the step **340** is not satisfied. If the profit margin is larger than a threshold amount, then the computer may determine that the check in the step **340** is satisfied. By checking the profitability in the step **340,** the computer can avoid presenting the upgrade offer that may financially burden the transportation service provider.

At step **350,** the computer checks an amount of discount of the upgrade. In one aspect, the computer determines whether the discount exceeds a threshold amount. In response determining that the discount amount exceeds the threshold amount, the computer may determine that the check performed in the step **350** is not satisfied, because such discount may devalue the transportation service provider. In response determining that the discount amount does not exceed the threshold amount, the computer may determine that the check performed in the step **350** is satisfied.

**FIG. 4** illustrates a method **400** of reposition estimate check, in accordance with an embodiment. The method **400** may be performed as part of the step **320** in **FIG. 3****.** The method **400** may be performed by one or more computers of a system (e.g., server **152** of transportation reservation system **150,** server **102** of demand forecast system **110**). In some embodiments, the method **400** is performed by other entities. Although the method **400** is described as performing reposition estimate analysis with respect to a single upgrade offer for simplicity, the method **400** can be performed for additional upgrade offers (or each of other categories of transportation service).

At step **410,** the computer determines a first itinerary of the requested transportation service. The computer may determine one or more airports en route for the requested transportation service in the reservation request message **218.** For example, the computer may determine a departure airport, an arrival airport, and any intervening airport for the requested category of transportation service.

At step **420,** the computer determines a second itinerary of a potential transportation service (or an upgrade transportation service). The computer may determine one or more airports en route for a potential category of transportation service. For example, the computer may determine a departure airport, an arrival airport, and any intervening airport en route for the potential category of transportation service.

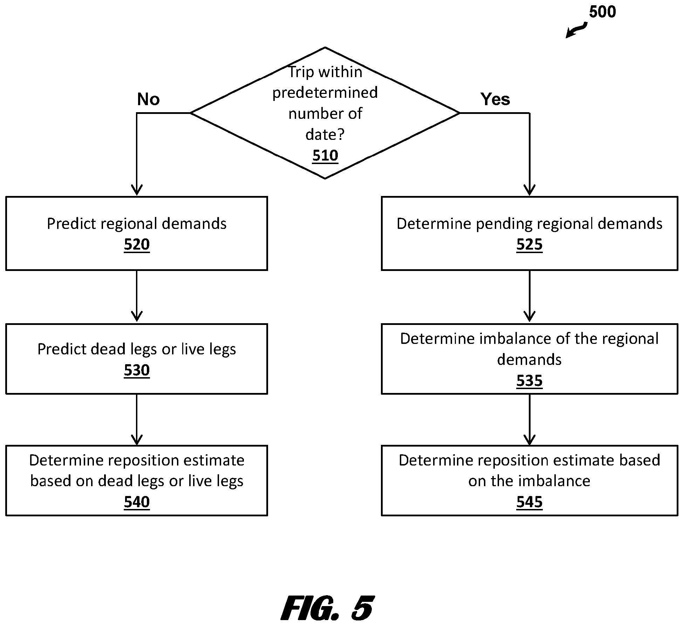

At step **430,** the computer may determine a first reposition estimate of a requested transportation service. According to the first itinerary of the requested transportation service, the computer may determine one or more airports en route, and determine one or more airports, at which reposition should be performed for the requested transportation service. For example, the computer may determine that an airplane should be repositioned from an airport to the departure airport or determine that the airplane in the arrival airport should be repositioned to another airport. For each airport, at which reposition should be performed, the computer may determine a reposition estimate, according to a distance of reposition, time duration for the reposition, associated fees at the airport, regional demands, etc. An example process of determining a reposition estimate is provided below with respect to **FIG. 5****.** The computer may determine a total reposition estimate of repositioning at the one or more airports by adding or obtaining a sum of all reposition estimates for the first itinerary.

In one aspect, the computer may determine or predict reposition estimates per regions (e.g., geographical regions). For example, a region may include one or more cities, one or more counties, or one or more states. In one aspect, reposition cost between two airports within the same region may not be substantial. By determining or predicting reposition estimates per region, the amount of data being analyzed can be simplified to conserve computational resources.

At step **440,** the computer determines a second reposition estimate of the potential category of transportation service. The computer may determine the second reposition estimate according to the second itinerary of the upgrade to the transportation service, in a similar manner for determining the first reposition estimate for the first itinerary.

At step **450,** the computer determines whether the reposition estimate check is satisfied based on the first reposition estimate and the second reposition estimate. For example, the computer may compare the first reposition estimate and the second reposition estimate, and determine whether the regional demand reposition check is satisfied according to the comparison. For example, in response to the first reposition estimate being larger than the second reposition estimate, the computer may determine that the regional demand reposition check is satisfied. In response to the first reposition estimate being less than the second reposition estimate, the computer may determine that the regional demand reposition check is not satisfied.

Advantageously, offering an upgrade for a transportation service as disclosed herein can improve utilization of transportation resources. For example, if the reposition estimate of travel through the potential category of transportation service is higher than the reposition estimate of travel through the requested cate gory of transportation service, the potential category of transportation service may be wasteful in terms of reposition (or transportation resources). By determining whether to provide an upgrade offer based on the analysis of reposition estimates, offering wasteful transportation services can be obviated.

**FIG. 5** illustrates a method **500** of determining a reposition estimate, in accordance with an embodiment. The method **500** may be performed as part of the step **410** or the step **420** in **FIG. 4****.** The method **500** may be performed by a one or more computers of a system (e.g., server 152 of transportation reservation system **150,** server **102** of demand forecast system **110**). In some embodiments, the method **500** is performed by other entities. In some embodiments, the method **500** includes more, fewer, or different steps than shown in **FIG. 5****.**

At step **510,** the computer determines whether the trip is to occur within a predetermined number of dates. For example, the computer determines whether the first departure or last arrival is to occur within a predetermined number of dates (e.g., 7 days). In one aspect, the computer (or another device) may predict regional demands if the trip is scheduled after the predetermined number of dates, because more travel reservations can be made and the pending demands may not accurately reflect actual demands during the travel time. Meanwhile, the computer may utilize pending demands if the trip is scheduled to occur within the predetermined number of dates, because the pending demands may be close (temporally and/or geographically) to the actual demands during the travel time.

At step **520,** in response to determining that the trip is scheduled to occur after a predetermined number of dates (e.g., 7 days), the computer may predict regional demands. The computer may obtain an itinerary, and determine one or more airports en route (e.g., departure airport, arrival airport, and any intervening airport). The computer may predict regional demands based on prior records of travel history. The computer may query another computer system (e.g., server **102** of demand forecast system **110**) to obtain predicted regional demands during the scheduled trip. The computer (e.g., server **152** of transportation reservation system **150**) or another computer (e.g., server **102** of demand forecast system **110**) may predict regional demands based on whether the transportation service is scheduled to occur during a particular day of a week, a particular week of a year, or during a holiday. For example, a travel demand in a particular region or an airport can be predicted to increase during a holiday season, based on prior travel records.

At step **530,** the computer may predict any dead legs or live legs, based on the predicted regional demands. In one example, the computer may predict a reposition from one region to another region may be a dead leg, if the travel demand from the one region to the other region is below a threshold value. In one example, the computer may predict a reposition from one region to another region may be a live leg, if the predicted travel demand from the one region to the other region is above a threshold value.

At step **540,** the computer may determine a reposition estimate. In one example, the computer may determine a reposition estimate, according to a distance of reposition, fees at the airport, regional demands, etc. The computer may apply a surcharge or a discount according to travel records for a time duration (e.g., 2 years). The computer may obtain, for each airport en route, a travel record for a time duration (e.g., 2 years). The computer may determine, for each airport en route, a ratio of arrival and departure, and a gap or a difference between an arrival record and a departure record. According to the ratio of arrival and departure and the gap, the computer may determine a reposition estimate. For example, if the ratio of arrival and departure is less than a threshold number (e.g., 60 percent) or the gap is less than a threshold number (e.g., 4), the computer may not apply any surcharge or discount. For example, if the ratio of arrival and departure is larger than the threshold number (e.g., 60 percent) and the gap is larger than a threshold number (e.g., 4), the computer may apply a surcharge or discount according to live leg or dead leg. For instance, for reposition of live legs, the system may apply 5-15% of surcharge. For reposition of dead legs, the computer may apply a discount according to the determined gap. The discount amount may be linear or non-linear, according to the gap. For example, the system may apply a 5% discount for 4 hours of gap and 15% discount for 14 hours of gap. The computer may obtain a total reposition estimate of repositioning at the one or more airports en route by adding or obtaining a sum of all reposition estimates at the one or more airports.

At step **525,** in response to determining that the trip is scheduled to occur within the predetermined number of dates, the computer may determine pending regional demands. The computer may obtain an itinerary, and determine one or more airports en route (e.g., departure airport, arrival airport, and any intervening airport). In some cases, computer may obtain pending regional demands by querying another computer system, such as internal databases of the system, external databases of third-party systems, or databases of public transportation monitoring systems (e.g., transportation scheduling system **180**). For example, the computer may provide a request of pending travel demands for a particular time period in a particular region or an airport. In response to the request, the computing devices or databases of the other systems (e.g., transportation scheduling system **180**) may provide travel data indicating pending travel demands during the particular time period for the requested region or airport.

At step **535,** the computer may determine an imbalance score of regional demands. For example, the computer may obtain a difference value of regional demands in two regions (e.g., departure region and arrival region). If the difference is larger than a threshold value, the computer may determine that the regional demands are imbalanced. If the difference is less than the threshold value, the computer may determine that the regional demands are balanced.

At step **545,** the computer may determine a reposition estimate based on the imbalance. In one approach, the computer determines whether a reposition helps or hurts regional imbalances. For example, a departure from or an arrival at a crowded airport or crowded region may further increase or worsen the imbalance in regional demands. For example, a departure from or an arrival at a less crowded airport or less crowded region may help reduce or mitigate the imbalance in regional demands. For a helpful reposition, the computer may determine a reposition estimate as a cost of reposition to or from the nearest base within the same region. For a hurtful reposition, the computer may determine a reposition estimate as a cost of reposition to or from the nearest base within a region that needs balancing. The region may be expanded according to the amount of imbalance. The computer may obtain a total reposition estimate of repositioning at the one or more airports en route by adding or obtaining a sum of all reposition estimates at the one or more airports.

In one approach, the computer can implement a demand reposition machine-learning architecture to determine a reposition estimate. The demand reposition machine-learning architecture can include a neural network model trained with itineraries and corresponding reposition estimates determined through the methods **400** and **500,** such that the neural network model of the demand reposition machine-learning architecture can output a predicted reposition estimate for an input itinerary (e.g., departure region, arrival region, departure date, arrival date, category of transportation service, etc.). In one aspect, determining the reposition estimate involves querying computers of other computing systems (e.g., demand forecast system **110** and/or the transportation scheduling system **180**) and processing a large amount of data for regional demands or pending regional demands of different regions. By implementing the demand reposition machine-learning architecture, the computer can obtain reposition estimates in a prompt manner while reducing communication with other computing systems (e.g., demand forecast system **110** and/or the transportation scheduling system **180**).

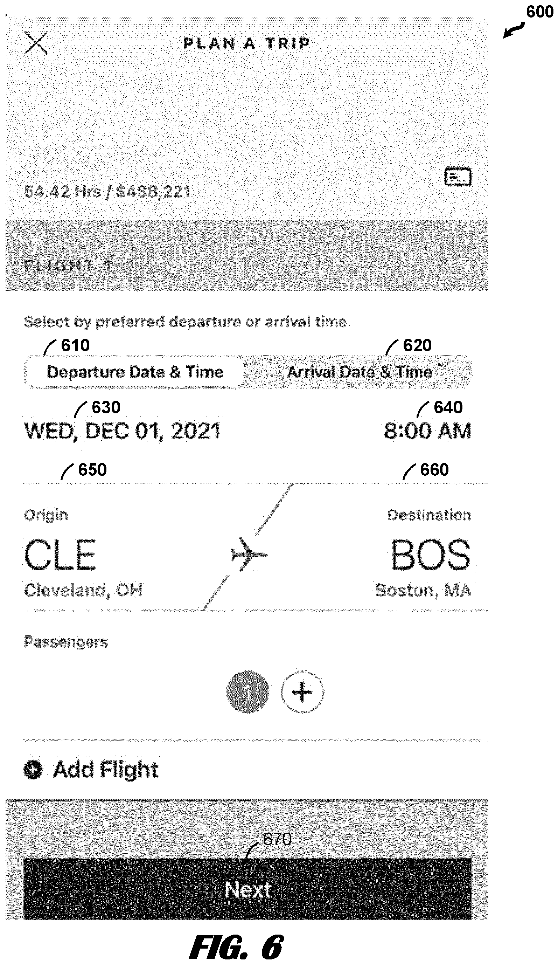

**FIG. 6** illustrates an example user interface **600** to search for available flights, in accordance with an embodiment. A client device (e.g., the client device **130**) may present the user interface **600** to allow the user operating the client device to select or specify arrival and departure information of a trip. In some embodiments, the user interface **600** includes more, fewer, or different features or arrangements than shown in **FIG. 6****.**

In one example, the user interface **600** includes areas **610-660** to specify information regarding departure and arrival. For example, the user interface **600** includes the area **610** to select a departure date & time and the area **620** to select an arrival date & time. In addition, the user interface **600** includes the area **630** allowing the user to select or specify a date and the area **640** allowing the user to select or specify a time. For example, a user may press the area **610,** and then select or specify a target date in the area **630** and a target time in the area **640** to select or specify target departure time and target departure date. For example, a user may press the area **620,** and then select or specify a target date in the area **630** and a target time in the area **640** to select or specify target arrival time and target departure date. In one example, the user interface **600** includes an area **650** allowing the user to select or specify a departure airport and an area **660** allowing the user to select or specify a destination airport.

In one example, the user interface **600** includes an area **670** to search for available flights. For example, after selecting or specifying departure and arrival information in the areas **610-660** of the user interface **600,** the user can click or press the area **670.** In response to the user clicking or pressing the area **670,** the client device may generate a query message to request a list of available transportation services for a particular destination and/or the departure date as selected in the areas **610-660,** and transmit the query message to a transportation reservation system (e.g., transportation reservation system **150**).

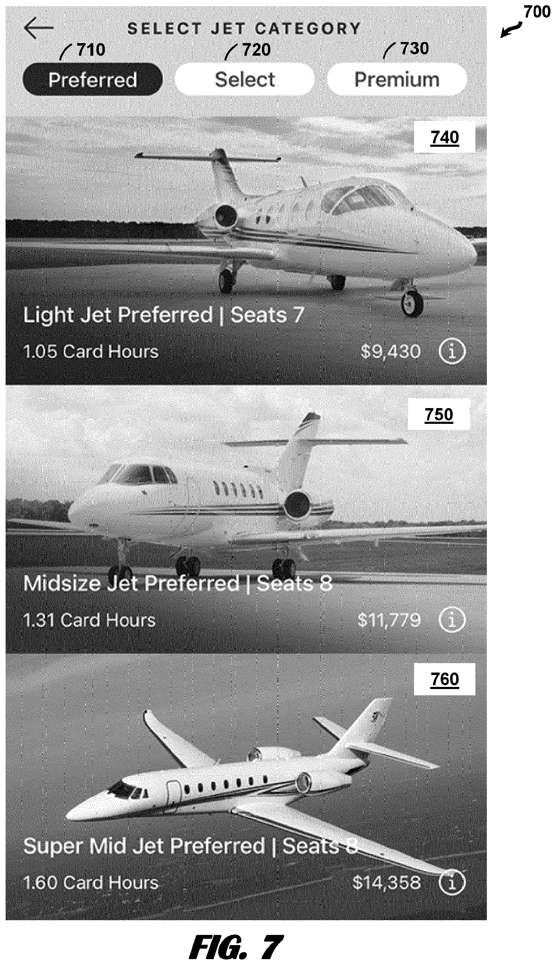

**FIG. 7** illustrates an example user interface **700** to select a category of a transportation service, in accordance with an embodiment. The client device (e.g., the client device **130**) may present the user interface **700** to allow the user operating the client device to select or specify a category of a plane. In some embodiments, the user interface **700** includes more, fewer, or different features or arrangements than shown in **FIG. 7****.**

In one example, the user interface **700** includes areas **710, 720, 730,** each associated with a corresponding category of airplane. For example, the area **710** is associated with a preferred category; the area **720** is associated with a select category; and the area **730** is associated with a premium category.

In one example, the user interface **700** includes areas **740, 750, 760** showing available flights for a selected category of airplane. The client device **130** may receive a list of available flights, in response to the query message, and present one or more of the available flights in the areas **740, 750, 760.** Each of the areas **740, 750, 760** may show an image of an available flight and a corresponding fare amount. In one aspect, available flights shown in the areas **740, 750, 760** may be updated according to the selection of the area **710, 720,** or **730.** For example, in response to the user selecting the area **710,** three preferred category of airplanes can be shown in the areas **740, 750, 760.** For example, in response to the user selecting the area **730,** three premium category of airplanes can be shown in the areas **740, 750, 760.** The user may click or press one of the areas **740, 750, 760** to select a desired category of plane.

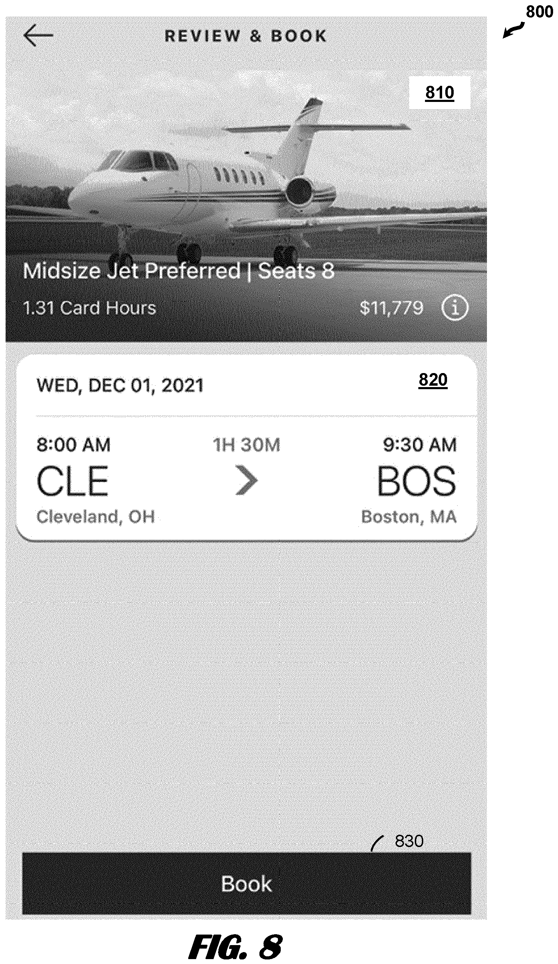

**FIG. 8** illustrates an example user interface **800** to confirm the user's selection of the transportation service, in accordance with an embodiment. A client device (e.g., the client device **130**) may present the user interface **800** to confirm the user's selections, and to request reservation of the flight according to the user's selection. In some embodiments, the user interface 800 includes more, fewer, or different features or arrangements than shown in **FIG. 8****.**

In one example, the user interface **800** includes areas **810** and **820** to confirm the user's selection. The area **810** may display the user's selection of the selected flight or a category of flight/plane. The area **820** may display the user's selection of the arrival/departure information. For example, the area **820** may display the departure date, departure time, arrival date, arrival time, departure airport, and an arrival airport.

In one example, the user interface **800** includes an area **830** to generate a reservation request message (e.g., reservation request message **218**). The reservation request message may indicate a selected departure date, departure time, arrival date, arrival time, and category of airplane. The client device may transmit the reservation request message to the transportation reservation system (e.g., transportation reservation system **150**) to request reservation of the flight.

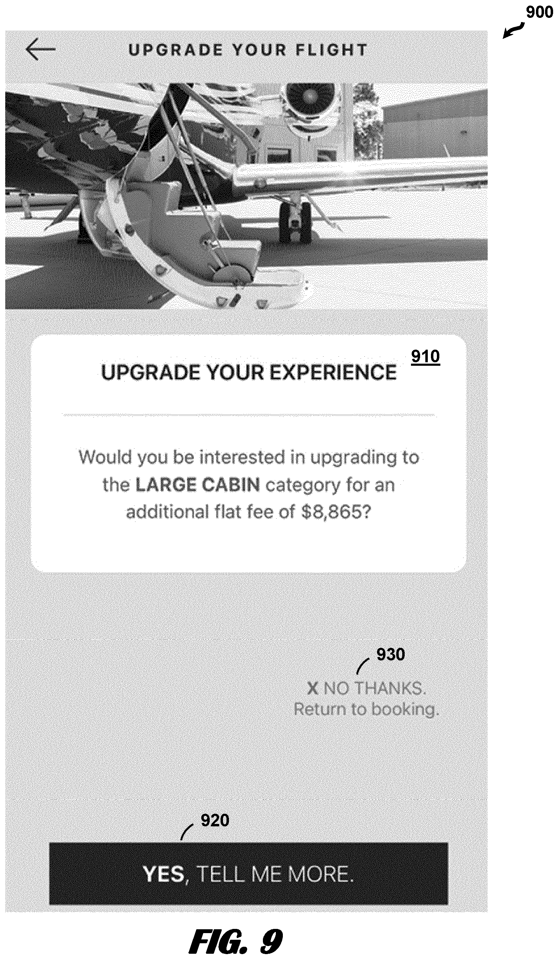

**FIG. 9** illustrates an example user interface **900** to present an upgrade offer, in accordance with an embodiment. A client device (e.g., client device **130**) may present the user interface **900** to present an upgrade offer. As described above with respect to **FIG. 2****,** after transmitting a reservation request message (e.g., reservation request message **218**), a transportation reservation system (e.g., transportation reservation system **150**) may perform a set of checks, and generate an upgrade offer message (e.g., upgrade offer message **228**) if a threshold number of checks are satisfied. The upgrade offer message may indicate a category of airplane to be upgraded, and a fare amount for the upgrade. The transportation reservation system may transmit the upgrade offer message to the client device. The client device may receive the upgrade offer message and generate the user interface **900** to notify the user that an upgrade or a different category of transportation service is available. In some embodiments, the user interface **900** includes more, fewer, or different features or arrangements than shown in **FIG. 9****.**

In one example, the user interface **900** includes an area **910** to notify to the user that an upgrade for the flight is available. The area **910** may present a category of airplane to be upgraded, and a fare amount for the upgrade, as indicated by the upgrade offer message.

In one example, the user interface **900** includes areas **920, 930** allowing the user to accept or reject the upgrade offer. For example, the user may press or click the area **930** to reject the upgrade offer. For example, the user may press or click the area **920** to accept the upgrade offer or learn more details about the upgrade offer. In response to the user pressing or clicking the area **920** or the area **930,** the client device may generate an upgrade selection message indicating whether the user accepted or rejected the upgrade offer, and transmit the upgrade selection message to the transportation reservation system. In response to the upgrade selection message indicating that the user accepted the upgrade offer, the transportation reservation system may process reservation of the upgraded travel service.

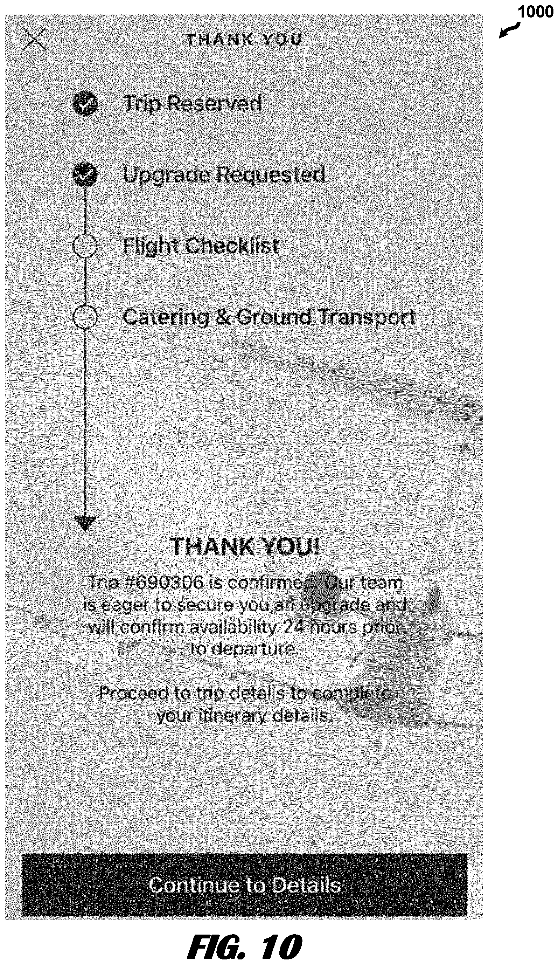

**FIG. 10** illustrates an example user interface **1000** to confirm the upgrade request, in accordance with an embodiment. The user interface **1000** may include an area **1010** to confirm the upgrade request. A client device (e.g., client device **130**) may present the user interface **1000,** in response to the user pressing or clicking an area (e.g., area **920**) to accept the upgrade offer. In some embodiments, the user interface **1000** includes more, fewer, or different features or arrangements than shown in **FIG. 10****.**

The foregoing method descriptions and the process flow diagrams are provided merely as illustrative examples and are not intended to require or imply that the steps of the various embodiments must be performed in the order presented. The steps in the foregoing embodiments may be performed in any order. Words such as "then," "next," etc., are not intended to limit the order of the steps; these words are simply used to guide the reader through the description of the methods. Although process flow diagrams may describe the operations as a sequential process, many of the operations can be performed in parallel or concurrently. In addition, the order of the operations may be re-arranged. A process may correspond to a method, function, procedure, subroutine, subprogram, or the like. When a process corresponds to a function, the process termination may correspond to a return of the function to a calling function or a main function.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

The actual software code or specialized control hardware used to implement these systems and methods is not limiting of the invention. Thus, the operation and behavior of the systems and methods were described without reference to the specific software code, it being understood that software and control hardware can be designed to implement the systems and methods based on the description herein.

When implemented in software, the functions may be stored as one or more instructions or code on a non-transitory computer-readable or processor-readable storage medium. The steps of a method or algorithm disclosed herein may be embodied in a processor-executable software module, which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that is accessible by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. "Disk" and "disc," as used herein, include compact disc (CD), laser disc, optical disc, digital versatile disc (DVD), floppy disk, and Blu-ray disc formats, wherein "disks" reproduce data magnetically, while "discs" reproduce data optically with lasers. Combinations of the above should also be included within the scope of computer-readable media. Additionally, the operations of a method or algorithm may reside as one or any combination or set of codes and/or instructions on a non-transitory, processor-readable medium and/or computer-readable medium, which may be incorporated into a computer program.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the following claims and the principles and novel features disclosed herein.

While various aspects and embodiments have been disclosed, other aspects and embodiments are contemplated. The various aspects and embodiments disclosed are for purposes of illustration and are not intended to be limiting, with the true scope and spirit being indicated by the following claims.

## Claims

1. A computer-implemented method comprising:
receiving, by a computer from a client device associated with a user, a reservation request for a transportation service including an itinerary indicating a first location, a second location, and a first service category of the transportation service;
determining, by the computer, a plurality of reposition estimates for a plurality of service categories including the first service category and one or more potential service categories, each reposition estimate being determined based upon the first location, the second location, and a particular service category of the plurality of service categories;
identifying as a second service category, by the computer, the potential service category having the reposition estimate comparatively lower than the reposition estimate of the first service category in the reservation request;
predicting, by the computer, an acceptance likelihood score that the user accepts the second service category by applying a machine-learning architecture on upgrade history data for the user stored in a database; and
responsive to determining that the acceptance likelihood score satisfies a corresponding acceptance likelihood threshold, transmitting, by the computer, to the client device an upgrade notification indicating an eligibility to update the itinerary to include the second service category.

2. The method of claim 1, further comprising:
determining, by the computer, an upgrade eligibility score for a user of the client device based upon the itinerary and one or more historic itineraries associated with the user stored in a database; and
determining, by the computer, that the upgrade eligibility score for the user satisfies a user eligibility threshold, wherein the computer transmits the upgrade notification based in part upon determining that the upgrade eligibility score for the user satisfies the user eligibility threshold.

3. The method of claim 1, wherein determining the reposition estimate for the first service category includes:
applying, by the computer, a demand reposition machine-learning architecture on the itinerary using the first location, the second location, and the first service category; and
for each potential service category, applying, by the computer, the demand reposition machine-learning architecture on the itinerary using the first location, the second location, and the particular service category.

4. The method of claim 1, wherein determining, by the computer, the plurality of reposition estimates for the plurality of service categories includes:
determining, by the computer, the reposition estimate of the first service category, based on first regional demands associated with the first service category;
determining, by the computer, the reposition estimate of one of the one or more potential service categories, based on second regional demands associated with the one of the one or more potential service categories; and
comparing, by the computer, the reposition estimate of the first service category and the reposition estimate of the one of the one or more potential service categories.

5. The method of claim 4, wherein determining, by the computer, the plurality of reposition estimates for the plurality of service categories includes:
determining, by the computer, whether the transportation service is scheduled within a predetermined number of dates.

6. The method of claim 5, wherein, in response to determining that the transportation service is scheduled after the predetermined number of dates, determining, by the computer, the reposition estimate of the one of the one or more potential service categories includes:
predicting, by the computer, the second regional demands for one or more flights in regions associated with the one of the one or more potential service categories based on prior flight records of the regions; and
determining, by the computer, the reposition estimate of the reposition estimate of the one of the one or more potential service categories based on the predicted second regional demands.

7. The method of claim 6, wherein predicting, by the computer, the second regional demands for the one or more flights in the regions associated with the one of the one or more potential service categories based on the prior flight records of the regions is based on whether the transportation service is scheduled to occur during a particular day of a week, a particular week of a year, or during a holiday.

8. The method of claim 5, wherein, in response to determining that the transportation service is scheduled within the predetermined number of dates, determining, by the computer, the reposition estimate of the one of the one or more potential service categories includes:
determining, by the computer, pending regional demands for one or more flights in regions associated with the one of the one or more potential service categories as the second regional demands;
determining, by the computer, a balance of the second regional demands; and
determining, by the computer, the reposition estimate of the one of the one or more potential service categories, based on the second regional demands.

9. The method of claim 2, further comprising:
determining, by the computer, whether the user has rejected upgrade offers more than a threshold number of times within a time period; and
generating, by the computer, the upgrade notification, based at least on determining that the user has not rejected the upgrade offers more than the threshold number of times within the time period.

10. The method of claim 2, further comprising:
determining, by the computer, whether an upgrade to the transportation service is beneficial to the user, based on a travel history of the user; and
generating, by the computer, the upgrade notification, based at least on determining that the upgrade is beneficial to the user.

11. The method of claim 10, wherein determining, by the computer, whether the upgrade to the transportation service is beneficial to the user, includes:
determining, by the computer, a first fare amount that the user would have paid for the second service category, based on the travel history of the user;
determining, by the computer, a second fare amount of the second service category; and
comparing, by the computer, the first fare amount and the second fare amount.

12. A system comprising:
a computer comprising one or more processors configured to:
receive, from a client device associated with a user, a reservation request for a transportation service including an itinerary indicating a first location, a second location, and a first service category of the transportation service;
determine a plurality of reposition estimates for a plurality of service categories including the first service category and one or more potential service categories, each reposition estimate being determined based upon the first location, the second location, and a particular service category of the plurality of service categories;
identify as a second service category the potential service category having the reposition estimate comparatively lower than the reposition estimate of the first service category in the reservation request;
predict an acceptance likelihood score that the user accepts the second service category by applying a machine-learning architecture on upgrade history data for the user stored in a database; and
responsive to determining that the acceptance likelihood score satisfies a corresponding acceptance likelihood threshold, transmit to the client device an upgrade notification indicating an eligibility to update the itinerary to include the second service category.

13. The system of claim 12, implementing the method of any one of claims 2 to 11.
